# EUROPÄISCHE PATENTSCHRIFT

(11) **EP 0 570 408 B1**
(45) Veröffentlichungstag und Bekanntmachung des Hinweises auf die Patenterteilung: **28.06.1995**
(21) Anmeldenummer: 92903612.7
(22) Anmeldetag: 04.02.1992
(51) Int. Cl.: G11B 7/095, G11B 21/10

(54) **OPTISCHES AUFZEICHNUNGS- UND/ODER WIEDERGABEGERÄT**
OPTICAL RECORDING AND/OR REPLAYING DEVICE
APPAREIL OPTIQUE D'ENREGISTREMENT ET/OU DE REPRODUCTION

(30) Priorität: 09.02.1991 DE 4103974
(43) Veröffentlichungstag der Anmeldung: 24.11.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(86) Internationale Anmeldenummer: EP9200229
(87) Internationale Veröffentlichungsnummer: WO9214242

(56) Entgegenhaltungen:
- EP-A- 0 254 748
- EP-A- 0 403 196
- US-A- 4 682 314
- US-A- 4 703 468
- Patent Abstracts of Japan, Band 10, Nr 300, P506, Zusammenfassung von JP 61-117738, publ 1986-06-05 (PIONEER ELECTRONIC CORP)
- Patent Abstracts of Japan, Band 9, Nr 327, P415, Zusammenfassung von JP 60-151846, publ 1985-08-09

## Beschreibung

Die Erfindung betrifft ein optisches Aufzeichnungs- und/oder Wiedergabegerät, bei dem ein Lichtstrahl mittels eines Fokusregelkreises auf einen rotierenden Aufzeichnungsträger fokussiert und mittels eines Spurregelkreises entlang der Datenspuren des Aufzeichnungsträgers geführt wird, wobei das Regelsignal des Fokus- und/oder Spurregelkreises in einem Speicher gespeichert wird und wobei für die Dauer einer Störung dem Stellglied des Fokus- und/oder des Spurregelkreises nicht das augenblickliche, sondern das im Speicher stehende Regelsignal zugeführt wird. Ein Gerät mit düsen Merkmalen ist aus EP-A-0 403 196 bekannt.

Als ein bekanntes Beispiel für ein optisches Wiedergabegerät sei der CD-Spieler erwähnt. Für den Fokus- und den Spurregelkreis ist der übergeordnete Begriff Servokreis gebräuchlich.

Die Servokreise eines CD-Spielers arbeiten sehr zuverlässig, solange der plattenförmige Aufzeichnungsträger, die sogenannte Compact Disc, keinerlei Fehler aufweist. Häufig sind aber die Platten durch Kratzer oder Löcher in der Spiegelschicht, die als Black Dots bezeichnet werden, beschädigt und meist noch mit Staub oder mit Fingerabdrücken verschmutzt.

Bereits Kratzer oder die unerwünschten Black Dots können sowohl das Regelsignal für den Fokusregelkreis, das sogenannte Fokusfehlersignal, als auch das Regelsignal für den Spurregelkreis, das meist als Spurfehlersignal bezeichnet wird, derart verfälschen, daß sich der Lichtstrahl weder auf die Platte fokussieren noch enttang den Datenspuren führen läßt.

Aus der EP-A 0 403 196 ist ein optisches Wiedergabegerät bekannt. Die Spurfehlersignale und die Fokusfehlersignale werden mittels mehrerer Abtast- und Halteglieder für jeweils eine Zeitspanne gespeichert. Wenn im Fokus- oder im Spurfehlersignal Fehler auftreten, wird nicht mehr das aktuelle Fokusfehlersignal bzw. das aktuelle Spurfehlersignal, sondern das gespeicherte Fokusfehler- bzw. Spurfehlersignal an das Stellglied des Fokusregelkreises bzw. Spurregelkreises gegeben.

In der JP-A 61-117738 ist ein optisches Wiedergabegerät beschrieben. Wenn Fehler auf der optischen Platte festgestellt werden, wird nicht mehr das aktuelle Fokusfehlersignal, sondern das zuletzt vor der Fehlerstelle gültige Fokusfehlersignal an das Stellglied des Fokusregelkreises gegeben.

In der JP-A 60-151846 ist es offenbart, in einem optischen Wiedersabegerat Fehler auf der Platte wie z.B. Risse oder Kratzer und Staub mittels eines Detektors zu detektieren. Wenn der die Daten abtastende Lichtstrahl auf der Platte auf eine fehlerhafte oder verschmutzte Stelle kommt, wird der zuletzt vor der Störstelle gültige Wert des Spurfehlersignales beibehalten und anstelle des aktuellen Spurfehlersignales dem Stellglied des Spurregelkreises zugeführt.

Es ist nun Aufgabe der Erfindung, die Servokreise eines optischen Aufzeichnungs- und/oder Wiedergabegerätes so zu gestalten, daß seine Servokreise bei Plattenfehlern nicht mehr ausfallen.

Die Erfindung löst diese Aufgabe dadurch, daß für mindestens die jeweils letzte Umdrehung des rotierenden Aufzeichnungsträgers vor der Störung das Regelsignal des Fokus- und/oder Spurregelkreises im Speicher gespeichert wird und daß eine Störung angenommen wird, wenn ein Schocksensor eine mechanische Erschütterung des Aufzeichnungs- und/oder Wiedergabegerätes detektiert.

Es zeigen
- Figur 1: ein erstes Ausführungsbeispiel
- Figur 2: ein zweites Ausführungsbeispiel
- Figur 3: ein drittes Ausführungsbeispiel der Erfindung
- Figur 4: den zeitlichen Verlauf des Datensignals
- Figur 5: den zeitlichen Verlauf des Fokus- und des Spurfehlersignals.

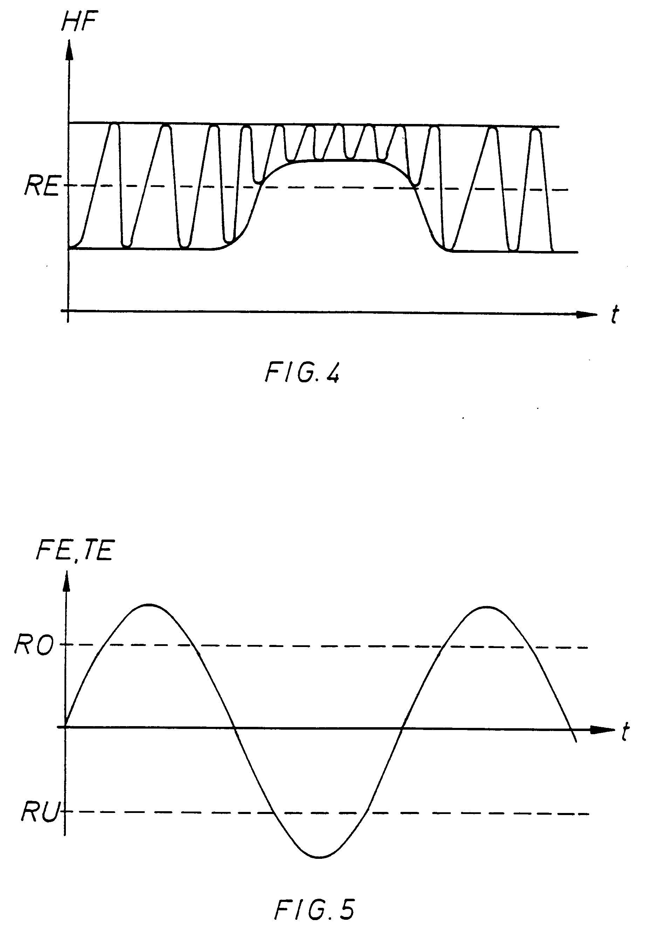

Es wird nun das in Figur 3 gezeigte Ausführungsbeispiel beschrieben und anhand der Figur 3 erläutert.

Das Fokusfehlersignal FE oder das Spurfehlersignal TE, das mittels eines Photodetektors PD erzeugt wird, gelangt an den Eingang eines Reglers RG und eines Analog-Digital-Wandlers AD. Der Ausgang des Reglers RG ist über einen steuerbaren Schalter S1 mit dem ersten Eingang einer Summationsstelle SU verbunden, deren Ausgang mit dem Stellglied SG des Servokreises verbunden ist. Der Ausgang des Analog-Digital-Wandlers AD ist mit dem Eingang eines Speichers SP verbunden, dessen Ausgang über einen steuerbaren Schalter S2 über einen Digital-Analog-Wandler DA an den zweiten Eingang der Summationsstelle SU angeschlossen ist. Der Ausgang eines Schocksensors S, der mechanische Erschütterungen des Aufzeichnungs- und/oder Wiedergabegerätes detektiert, ist mit den Steuereingängen der beiden steuerbaren Schalter S1 und S2 verbunden.

Wenn der Schocksensor einen mechanischen Stoß auf das Aufzeichnungs- und Wiedergabegerät detektiert, bewirkt sein Ausgangssignal, daß der steuerbare Schalter S1 geöffnet, der steuerbare Schalter S2 dagegen geschlossen wird. Wenn die Wirkung der mechanischen Erschütterung nachläßt, bewirkt das Ausgangssignal des Schocksensors, daß der steuerbare Schalter S1 geschlossen und gleichzeitig der steuerbare Schalter S2 geöffnet wird.

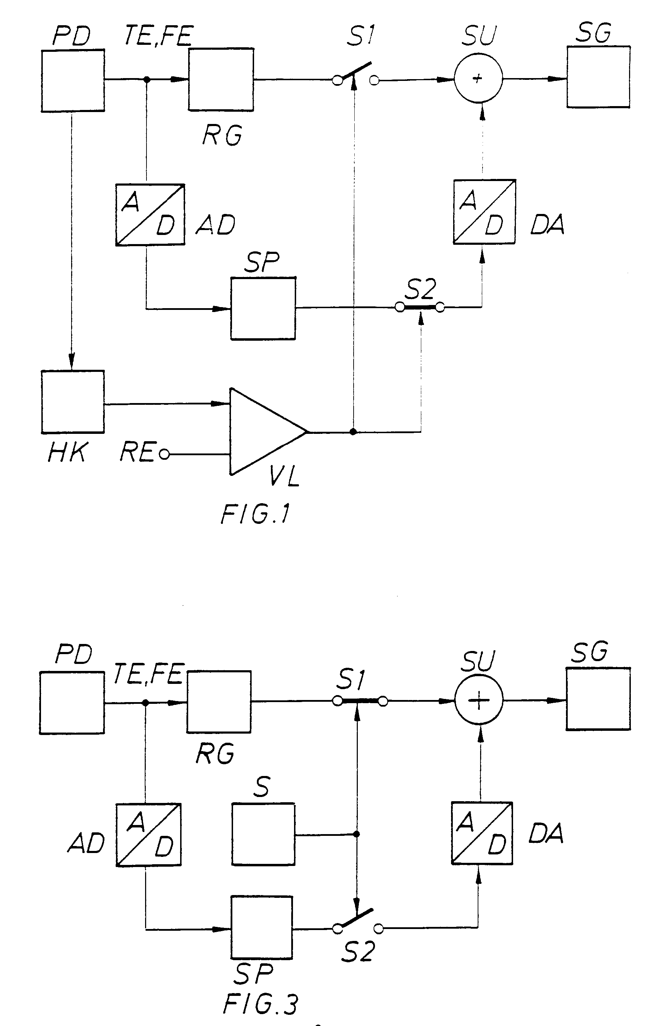

Es wird nun das in Figur 1 gezeigte Ausführungsbeispiel beschrieben und anhand der Figur 4 erläutert. Zusätzlich zur der Detektion einer Störung mittels des Schocksensors S kann eine Störung auch an Hand der oberen und unteren Hüllkurve des Datensignales HF festgestellt werden.

Das Fokusfehlersignal FE oder das Spurfehlersignal TE, das mittels eines Photodetektors PD erzeugt wird, gelangt an den Eingang eines Reglers RG und eines Analog-Digital-Wandlers AD. Der Ausgang. des Reglers RG ist über einen steuerbaren Schalter S1 mit dem ersten Eingang einer Summationsstelle SU verbunden, deren Ausgang mit dem Stellglied SG des Servokreises verbunden ist. Der Ausgang des Analog-Digital-Wandlers AD ist mit dem Eingang eines Speichers SP verbunden, dessen Ausgang über einen steuerbaren Schalter S2 an den zweiten Eingang der Summationsstelle SU angeschlossen ist. Das Datensignal HF, das der Photodetektor PD oder ein weiterer Photodetektor erzeugt, wird dem Eingang einer Schaltungsanordnung HK zugeführt, welche die untere Hüllkurve des Datensignals HF erzeugt. Eine derartige Schaltungsanordnung zur Erzeugung der Hüllkurve eines Datensignals ist z.B. aus der DE-OS 37 19 489 bekannt. Der Ausgang der Schaltungsanordnung HK ist mit dem ersten Eingang eines Vergleichers VL verbunden, an dessen zweitem Eingang eine Referenzgröße RE liegt. Der Ausgang des Vergleichers VL ist mit dem Steuereingang des steuerbaren Schalters S1 und S2 verbunden.

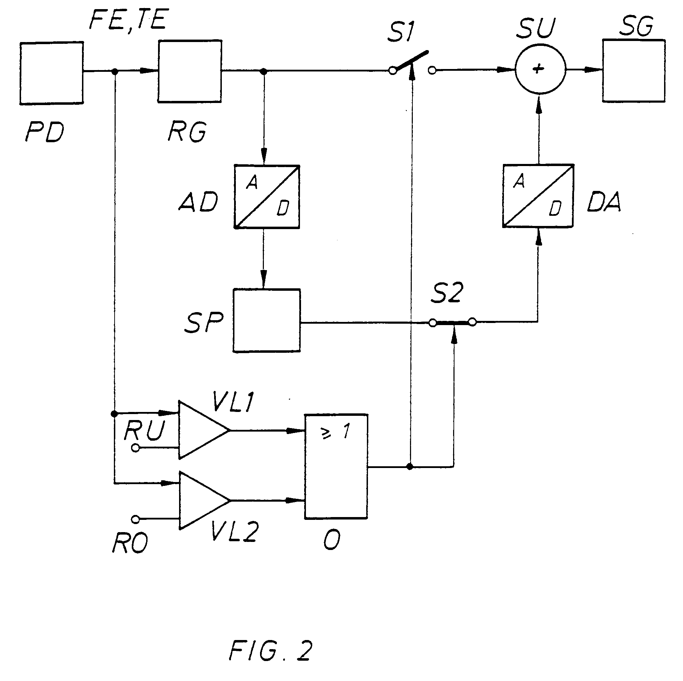

Im störungsfreien Betrieb ist die obere und die untere Hüllkurve des Datensignals HF, das in Figur 4 dargestellt ist, eine Gerade. Der steuerbare Schalter S1 ist geschlossen, während der steuerbare Schalter S2 geöffnet ist. Das analoge Fokusfehlersignal FE oder das analoge Spurfehlersignal TE wird mittels des Analog-Digital-Wandlers AD in digitale Werte umgewandelt, die jeweils für die letzte oder die letzten n Umdrehungen der Platte im Speicher SP gespeichert werden. Der Regler RG liefert das Regelsignal für das Stellglied SG des in Figur 2 abgebildeten Servokreises.

Sobald der Lichtstrahl Stellen auf der Platte abtastet, die z.B. durch Kratzer oder Löcher beschädigt sind, gibt es einen sogenannten HF-Einbruch, der in Figur 4 gezeichnet ist. Die untere Hüllkurve zeigt eine Ausbuchtung nach oben, weil die Amplituden des Datensignals HF abnehmen. Der Vergleichen VL stellt fest, daß die untere Hüllkurve den Referenzwert RE überschreitet und ändert deshalb das Signal an seinem Ausgang. Diese Signaländerung bewirkt, daß der steuerbare Schalter S1 geöffnet, der steuerbare Schalter dagegen geschlossen wird. Dem Stellglied SG wird nun nicht mehr das vom Regler RG erzeugte Regelsignal, sondern das im Speicher SP gespeicherte Regelsignal für die letzte oder die letzten n Umdrehungen der Platte zugeführt.

Weil das Stellglied SG deshalb ein zwar nicht mehr aktuelles, aber unverfälschtes Regelsignal erhält, werden Ausfälle des Servokreises infolge von Kratzern, Löchern oder Schmutz auf der Platte weitgehend vermieden. Während der Störung arbeitet der Servokreis nicht mehr in Echtzeit.

Sobald der Lichtstrahl wieder unbeschädigte Stellen auf der Platte abtastet, nehmen die Amplituden des Datensignals HF wieder zu; die untere Hüllkurve nimmt wieder die Form einer Geraden an. Wenn der Pegel der unteren Hüllkurve wieder unter den Referenzwert RE sinkt, schließt der Vergleicher VL den steuerbaren Schalter S1, während er gleichzeitig den steuerbaren Schalter S2 öffnet. Dem Stellglied SG wird jetzt wieder das vom Regler RG gelieferte augenblickliche Regelsignal zugeführt. Der Regelkreis arbeitet nun wieder in Echtzeit.

Es wird nun das in Figur 2 abgebildete zweite Ausführungsbeispiel beschrieben und mit Hilfe der Figur 5 erläutert. Zusätzlich zu dem Signal des Schocksensors S wird der Pegel des Spur- und/oder Fokusfehlersignales ausgewertet, um eine Störung zu detektieren.

Das Fokusfehlersignal FE oder das Spurfehlersignal TE wird dem Eingang eines Reglers RG sowie dem ersten Eingang eines Vergleichers VL1 und eines Vergleichers VL2 zugeführt, deren Ausgänge mit den Eingängen eines ODER-Gatters 0 verbunden sind. Am zweiten Eingang des Vergleichers VL1 liegt eine untere Referenzgröße RU, während am zweiten Eingang des Vergleichers VL2 eine obere Referenzgröße RO liegt. Der Ausgang des Reglers RG ist mit dem Eingang eines Analog-Digital-Wandlers AD und über einen steuerbaren Schalter S1 mit dem ersten Eingang einer Summationsstelle SU verbunden. Der Ausgang des Analog-Digital-Wandlers AD ist mit dem Eingang eines Speichers SP verbunden, dessen Ausgang über einen steuerbaren Schalter S2 mit dem Eingang eines Digital-Analog-Wandlers DA verbunden ist. Der Ausgang des Digital-Analog-Wandlers DA ist mit dem zweiten Eingang der Summationsstelle SU verbunden. Der Ausgang der Summationsstelle SU ist mit dem Eingang des Stellgliedes SG verbunden. Der Ausgang des ODER-Gatters ist mit dem Steuereingang des steuerbaren Schalters S1 und S2 verbunden.

Im störungsfreien Betrieb erhält das Stellglied SG vom Regler RG das Regelsignal. Das Fokusfehlersignal FE und das Spurfehlersignal TE haben einen sinusförmigen Verlauf, wie in Figur 5 dargestellt ist. Wenn das Fokusfehlersignal FE bzw. das Spurfehlersignal TE den oberen Referenzwert RO überschreitet, gibt der Vergleicher VL2 ein Signal an das ODER-Gatter 0 ab. Sinkt dagegen das Fokusfehlersignal FE oder das Spurfehlersignal TE unter den unteren Referenzwert RU, so gibt der Vergleicher VL1 ein Signal an das ODER-Gatter 0 ab. In beiden Fällen liegt am Ausgang des ODER-Gatters 0 eine logische Eins, die bewirkt, daß der steuerbare Schalter S1 geöffnet, der steuerbare Schalter S2 dagegen geschlossen wird. Wie beim ersten Ausführungsbeispiel erhält das Stellglied SG nicht mehr das Regelsignal vom Regler RG, sondern ein analoges Regelsignal, das der Digital-Analog-Wandler aus den im Speicher gespeicherten digitalen Werten erzeugt.

Sobald die Störung abklingt, wenn der Lichtstrahl wieder auf unbeschädigte Stellen auf der Platte trifft, geht der Pegel am Ausgang der ODER-Gatters wieder auf logisch Null zurück. Das ODER-Gatter 0 bewirkt deshalb, daß der steuerbare Schalter S1 geschlossen, dagegen der steuerbare Schalter S2 geöffnet wird, damit der Servokreis wieder in Echtzeit die Fokussierung bzw. die Spurführung des die Daten abtastenden Lichtstrahls regeln kann.

Schließlich lassen sich die in den Figuren 1, 2 und 3 abgebildeten drei Ausführungsbeispiele beliebig miteinander kombinieren. Die Ausgänge der Vergleicher und des Schocksensors sind mit den Eingängen eines ODER-Gatters verbunden, dessen Ausgangssignal die steuerbaren Schalter S1 und S2 umschaltet.

Die Erfindung ist sowohl für optische Wiedergabegeräte, wie z.B. CD-Spieler und Videoplattenspieler als auch für optische Aufzeichnungs- und Wiedergabeoeräte geeignet. Als Beispiele für Aufzeichnungs- und Wiedergabegeräte seien DRAW-Disc-Spieler und magneto-optische Geräte genannt.

## Patentansprüche

1. Optisches Aufzeichnungs- und/oder Wiedergabegeräte, bei dem ein Lichtstrahl mittels eines Fokusregelkreises auf einen rotierenden Aufzeichnungsträger fokussiert und mittels eines Spurregelkreises entlang der Datenspuren des Aufzeichnungsträgers geführt wird, wobei das Regelsignal (FE, TE) des Fokus- und/oder Spurregelkreises in einem Speicher (SP) gespeichert wird und wobei für die Dauer einer Störung dem Stellglied (SG) des Fokus- und/oder des Spurregelkreises nicht das augenblickliche, sondern das im Speicher (SP) stehende Regelsignal zugeführt wird, **dadurch gekennzeichnet,** daß für mindestens die jeweils letzte Umdrehung des rotierenden Aufzeichnungsträgers vor der Störung das Regelsignal (FE, TE) des Fokus- und/oder Spurregelkreises im Speicher (SP) gespeichert wird und daß eine Störung angenommen wird, wenn ein Schocksensor (S) eine mechanische Erschütterung des Aufzeichnungs- und/oder Wiedergabegerätes detektiert.

2. Optisches Aufzeichnungs- und/oder Wiedergabegerät nach Anspruch 1, **dadurch gekennzeichnet,** daß im Speicher (SP) nur einzelne Werte des Regelsignals (FE, TE) abgelegt werden, die in einem vorgebbaren zeitlichen Abstand aufeinander folgen.

3. Optisches Aufzeichnungs- und/oder Wiedergabegerät nach Anspruch 1 oder 2, **dadurch gekenn****zeichnet,** daß eine Störung angenommen wird, wenn der Pegel des Datensignals (HF) unter einen vorgebbaren Schwellwert (RE) sinkt.

4. Optisches Aufzeichnungs- und/oder Wiedergabegerät nach Anspruch 1 oder 2, **dadurch gekenn****zeichnet,** daß eine Störung angenommen wird, wenn das Regelsignal (FE, TE) des Fokus- und/oder Spurregelkreises einen vorgebbaren oberen Schwellwert (RO) überschreitet oder einen vorgebbaren unteren Schwellwert (RU) unterschreitet.

5. Optisches Aufzeichnungs- und/oder Wiedergabegerät nach Anspruch 4, **dadurch gekennzeichnet,** daß zum Detektieren einer Störung das Regelsignal (FE, TE) des Fokus- und/oder Spurregelkreises über ein Filter einem Vergleicher zugeführt wird.

6. Optische Aufzeichnungs- und/oder Wiedergabegerät nach Anspruch 3 und 4, **dadurch gekennzeichnet,** daß eine Störung erst angenommen wird, wenn sowohl der Pegel des Datensignals (HF), als auch des Regelsignals (FE, TE) des Fokus- und/oder Spurregelkreises von den vorgegebenen Schwellwerten abweichen.

7. Optisches Aufzeichnungs- und/oder Wiedergabegerät nach Anspruch 1, **dadurch gekennzeichnet,** daß das Fokusfehlersignal (FE) oder das Spurfehlersignal (TE) dem Eingang eines Reglers (RG) und dem Eingang eines Analog-Digital-Wandlers (AD) zugeführt wird, daß der Ausgang des Reglers (RG) über einen ersten steuerbaren Schalter (S1) mit dem ersten Eingang einer Summationsstelle (SU) verbunden ist, deren Ausgang mit einem Stellglied (SG) verbunden ist, daß der Ausgang des Analog-Digital-Wandlers (AD) mit dem Eingang eines Speichers (SP) verbunden ist, dessen Ausgang über einen zweiten steuerbaren Schalter (S2) mit dem Eingang eines Digital-Analog-Wandlers (DA) verbunden ist, dessen Ausgang mit dem zweiten Eingang der Summationsstelle (SU) verbunden ist, und daß der Ausgang des Schocksenors (S) mit dem Steuereingang des ersten und des zweiten steuerbaren Umschalters (S1, S2) verbunden ist.

8. Optisches Aufzeichnungs- und/oder Wiedergabegerät nach Anspruch 3, **dadurch gekennzeichnet,** daß das Fokusfehlersignal (FE) oder das Spurfehlersignal (TE), das von einem Photodetektor (PD) erzeugt wird, dem Eingang eines Reglers (RG) und eines Analog-Digital-Wandlers (AD) zugeführt wird, daß der Ausgang des Reglers (RG) über einen steuerbaren Schalter (S1) mit dem ersten Eingang einer Summationsstelle (SU) verbunden ist, deren Ausgang mit dem Stellglied (S6) des Servokreises verbunden ist, daß der Ausgang des Analog-Digital-Wandlers (AD) mit dem Eingang eines Speichers (SP) verbunden ist, dessen Ausgang über einen zweiten steuerbaren Schalter (S2) an den zweiten Eingang der Summationsstelle (SU) angeschlossen ist, daß das Datensignal (HF), das der Photodetektor (PD) erzeugt, dem Eingang einer Schaltungsanordnuns ( HK) zugeführt wird, welche die untere Hüllkurve des Datensignals (HF) erzeugt, daß der Ausgang dieser Schaltungsanordnung (HK) mit dem ersten Eingang eines Vergleichers (VL) verbunden ist, an dessen zweitem Eingang eine Referenzgröße (RE) liegt, und daß der Ausgang des Vergleichers (VL) mit den Steuereingängen der steuerbaren Schalter (S1, S2) verbunden ist.

9. Optisches Aufzeichnungs- und/oder Wiedergabegerät nach Anspruch 4, **dadurch gekennzeichnet,** daß das Fokusfehlersignal (FE) oder das Spurfehlersignal (TE), das ein Photodetektor (PD) erzeugt, dem Eingang eines Reglers (RG) sowie dem ersten Eingang eines ersten Vergleichers (VL1) und eines zweiten Vergleichers (VL2) zugeführt wird, deren Ausgänge mit den Eingängen eines ODER-Gatters (O) verbunden sind, daß am zweiten Eingang des ersten Vergleichers (VL1) eine erste vorgebbare untere Referenzgröße (RU) liegt, während am zweiten Eingang des zweiten Vergleichers (VL2) eine vorgebbaren obere Referenzgröße (RO) liegt, daß der Ausgang des Reglers (RG) mit dem Eingang eines Analog-Digital-Wandlers (AD) und über einen ersten steuerbaren Schalter (S1) mit dem ersten Eingang einer Summationsstelle (SU) verbunden ist, daß der Ausgang des Analog-Digital-Wandlers (AD) mit dem Eingang eines Speichers (SP) verbunden ist, dessen Ausgang über einen zweiten steuerbaren Schalter (S2) mit dem Eingang eines Digital-Analog-Wandlers (DA) verbunden ist, dessen Ausgang mit dem zweiten Eingang der Summationsstelle (SU) verbunden ist, daß der Ausgang der Summationsstelle (SU) mit dem Eingang eines Stellgliedes (SG) verbunden ist und daß der Ausgang des ODER-Catters (O) mit dem Steuereingang des ersten und des zweiten steuerbaren Schalters (S1, S2) verbunden ist.

## Claims

1. An optical recording and/or reproduction device in which a light beam is focused onto a rotating recording medium by means of a focusing regulation circuit and guided along the data tracks of the recording medium by means of a tracking regulation circuit, in which the regulating signal (FE, TE) of the focusing and/or tracking regulation circuit is stored in a memory (SP) and in which instead of the momentary signal, the regulating signal present in the memory (SP) is fed to the adjusting member (SG) of the focusing and/or tracking regulation circuit for the duration of a disturbance, **characterised in that** the regulation signal (FE, TE) for the focusing and/or tracking regulation circuit is stored in the memory (SP) for at least the last respective rotation of the rotating recording medium prior to the disturbance, and that a disturbance is assumed when a shock sensor (S) detects a mechanical shock to the recording and/or reproduction device.

2. An optical recording and/or reproduction device according to claim 1, **characterised in that** only individual values of the regulating signal (FE, TE) are stored in the memory (SP), which follow each other at a predeterminable temporal separation.

3. An optical recording and/or reproduction device according to claim 1 or 2, **characterised in that** a disturbance is assumed when the level of the data signal (HF) drops below a predeterminable threshold value (RE).

4. An optical recording and/or reproduction device according to claim 1 or 2, **characterised in that** a disturbance is assumed when the regulating signal (FE, TE) of the focusing and/or tracking regulation circuit exceeds a predeterminable upper threshold value (RO) or drops below a predeterminable lower threshold value (RU).

5. An optical recording and/or reproduction device according to claim 4, **characterised in that,** in order to detect a disturbance, the regulating signal (FE, TE) of the focusing and/or tracking regulation circuit is supplied via a filter to a comparator.

6. An optical recording and/or reproduction device according to claim 3 and 4, **characterised in that** a disturbance is only assumed when both the level of the data signal (HF) and also of the regulating signal (FE, TE) of the focusing and/or tracking regulation circuit deviate from the predetermined threshold values.

7. An optical recording and/or reproduction device according to claim 1, **characterised in that** the focusing error signal (FE) or the tracking error signal (TE) is fed to the input of a regulator (RG) and the input of an analog-to-digital converter (AD), that the output of the regulator (RG) is connected via a first controllable switch (S1) to the first input of a summation point (SU), the output of which is connected to an adjusting member (SG), that the output of the analog-to-digital converter (AD) is connected to the input of a memory (SP), the output of which is connected via a second controllable switch (S2) to the input of a digital-to-analog converter (DA), the output of which is connected to the second input of the summation point (SU), and that the output of the shock sensor (S) is connected to the control input of the first and the second controllable switch (S1, S2).

8. An optical recording and/or reproduction device according to claim 3, **characterised in that** the focusing error signal (FE) or the tracking error signal (TE), which is generated by a photodetector (PD), is fed to the input of a regulator (RG) and an analog-to-digital converter (AD), that the output of the regulator (RG) is connected via a controllable switch (S1) to the first input of a summation point (SU), the output of which is connected to the adjusting member (SG) of the servo circuit, that the output of the analog-to-digital converter (AD) is connected to the input of a memory (SP), the output of which is connected via a second controllable switch (S2) to the second input of the summation point (SU), that the data signal (HF), which is generated by the photodetector (PD), is fed to the input of a circuit arrangement (HK) which generates the lower envelope curve of the data signal (HF), that the output of this circuit arrangement (HK) is connected to the first input of a comparator (VL) which has a reference variable (RE) applied to its second input, and that the output of the comparator (VL) is connected to the control inputs of the controllable switches (S1, S2).

9. An optical recording and/or reproduction device according to claim 4, **characterised in that** the focusing error signal (FE) or the tracking error signal (TE), which a photodetector (PD) generates, is fed to the input of a regulator (RG) as well as to the first input of a first comparator (VL1) and a second comparator (VL2), the outputs of which are connected to the inputs of an OR gate (O), that a first predeterminable lower reference value (RU) is applied to the second input of the first comparator (VL1), while a predeterminable upper reference value (RO) is applied to the second input of the second comparator (VL2), that the output of the regulator (RG) is connected to the input of an analog-to-digital converter (AD) and, via a first controllable switch (S1), to the first input of a summation point (SU), that the output of the analog-to-digital converter (AD) is connected to the input of a memory (SP), the output of which is connected via a second controllable switch (S2) to the input of a digital-to-analog converter (DA), the output which is connected to the second input of the summation point (SU), that the output of the summation point (SU) is connected to the input of an adjusting member (SG), and that the output of the OR gate (O) is connected to the control input of the first and the second controllable switch (S1, S2).

## Revendications

1. Appareil d'enregistrement et/ou de lecture optique dans lequel un faisceau lumineux est focalisé par un circuit de réglage de focalisation sur un support d'enregistrement en rotation et guidé le long des pistes de données du support d'enregistrement par un circuit de suivi de piste, le signal de réglage (FE, TE) du circuit de réglage de la focalisation et/ou du suivi de piste étant mémorisé dans une mémoire (SP) et l'organe de commande (SG) du circuit de réglage de focalisation et/ou du suivi de piste ne recevant pas, pendant la durée d'une perturbation, le signal de réglage instantané, mais celui qui est mémorisé dans la mémoire (SP), **caractérisé en ce que** le signal de réglage (FE, TE) du circuit de focalisation et/ou de suivi de piste est mémorisé dans la mémoire (SP) au moins pendant la dernière rotation respective du support d'enregistrement en rotation avant le défaut et en ce qu'un défaut est admis lorsqu'un capteur de chocs (S) détecte une secousse mécanique de l'appareil d'enregistrement et/ou de lecture.

2. Appareil d'enregistrement et/ou de lecture optique selon la revendication 1, **caractérisé en ce que** seules des valeurs individuelles du signal de réglage (FE, TE) se suivant à un écart de temps prédéfinissable sont mémorisées dans la mémoire (SP).

3. Appareil d'enregistrement et/ou de lecture optique selon la revendication 1 ou 2, **caractérisé en ce qu'**un défaut est admis lorsque le niveau du signal de données (HF) chute sous une valeur de seuil prédéfinissable (RE).

4. Appareil d'enregistrement et/ou de lecture optique selon la revendication 1 ou 2, **caractérisé en ce** qu'un défaut est admis lorsque le signal de réglage (FE, TE) du circuit de focalisation et/ou de suivi de piste dépasse une valeur de seuil supérieure(RO) ou chute sous une valeur de seuil inférieure (RU) prédéfinissables.

5. Appareil d'enregistrement et/ou de lecture optique selon la revendication 4, **caractérisé en ce que**, pour détecter un défaut, le signal de réglage (FE, TE) du circuit de focalisation et/ou de suivi de piste est transmis à un comparateur via un filtre.

6. Appareil d'enregistrement et/ou de lecture optique selon les revendications 3 ou 4, **caractérisé en ce qu'**un défaut n'est admis que lorsqu'à la fois le niveau du signal de données (HF) et le signal de réglage (FE, TE) du circuit de focalisation et/ou de suivi de piste s'écartent des seuils prédéterminés.

7. Appareil d'enregistrement et/ou de lecture optique selon la revendication 1, **caractérisé en ce que** le signal d'erreur de focalisation (FE) ou le signal d'erreur de piste (TE) est transmis à l'entrée d'un régulateur (RG) et à l'entrée d'un convertisseur analogique-numérique (AD), en ce que la sortie du régulateur (RG) est connectée via un premier commutateur réglable (S1) à la première entrée d'un additionneur (SU) dont la sortie est raccordée à un organe de commande (SG), en ce que la sortie du convertisseur analogique-numérique (AD) est connectée à l'entrée d'une mémoire (SP) dont la sortie est raccordée via un second commutateur réglable (S2) à l'entrée d'un convertisseur numérique-analogique (DA) dont la sortie est connectée à la seconde entrée de l'additionneur (SU) et en ce que la sortie du capteur de chocs (S) est raccordée à l'entrée de commande du premier et du second commutateur réglable (S1, S2).

8. Appareil d'enregistrement et/ou de lecture optique selon la revendication 3, **caractérisé en ce que** le signal d'erreur de focalisation (FE) ou le signal d'erreur de piste (TE) généré par un photodétecteur (PD) est transmis à l'entrée d'un régulateur (RG) et d'un convertisseur analogique-numérique (AD), en ce que la sortie du régulateur (RG) est connectée via un commutateur réglable (S1) à la première entrée d'un additionneur (SU) dont la sortie est raccordée à l'organe de commande (SG) du servocircuit, en ce que la sortie du convertisseur analogique-numérique (AD) est raccordée à l'entrée d'une mémoire (SP) dont la sortie est connectée à la seconde entrée de l'additionneur (SU) via un second commutateur réglable (S2), en ce que le signal de données (HF) généré par le photodétecteur (PD) est transmis à l'entrée d'un aménagement de circuit (HK) qui génère la courbe enveloppe inférieure du signal de données (HK), en ce que la sortie de cet aménagement de circuit (HF) est connectée à la première entrée d'un comparateur (VL) à la seconde entrée duquel est appliquée une grandeur de référence variable (RE) et en ce que la sortie du comparateur (VL) est raccordée aux entrées de commande des commutateurs réglables (S1, S2).

9. Appareil d'enregistrement et/ou de lecture optique selon la revendication 4, **caractérisé en ce que** le signal d'erreur de focalisation (FE) ou le signal d'erreur de piste (TE) généré par un photodétecteur (PD) est transmis à l'entrée d'un régulateur (RG) ainsi qu'à la première entrée d'un premier comparateur (VL1) et d'un second comparateur (VL2), dont les sorties sont connectées aux entrées d'une porte OU (0), en ce qu'une grandeur de référence inférieure (RU) prédéfinissable est appliquée à la seconde entrée du premier comparateur (VL1), alors qu'une grandeur de référence supérieure (RO) prédéfinissable est appliquée à la seconde entrée du second comparateur (VL2), en ce que la sortie du régulateur (RG) est raccordée à l'entrée d'un convertisseur analogique-numérique (AD) et via un premier commutateur réglable (S1), à la première entrée d'un additionneur (SU), en ce que la sortie du convertisseur analogique-numérique (AD) est connectée à l'entrée d'une mémoire (SP) dont la sortie est connectée via un second commutateur réglable (S2) à l'entrée d'un convertisseur numérique-analogique (DA) dont la sortie est raccordée à la seconde entrée de l'additionneur (SU), en ce que la sortie de l'additionneur (SU) est raccordée à l'entrée d'un organe de commande (SG) et en ce que la sortie de la porte OU (0) est connectée à l'entrée de commande du premier et du second commutateur réglable (S1, S2).
